# EUROPÄISCHE PATENTSCHRIFT

(11) **EP 1 060 823 B1**
(45) Veröffentlichungstag und Bekanntmachung des Hinweises auf die Patenterteilung: **31.12.2008**
(21) Anmeldenummer: 00112671.3
(22) Anmeldetag: 15.06.2000
(51) Int. Cl.: B23K 9/20, B23K 35/02

(54) **Schweisselement**
Welding element
Elément de soudage

(30) Priorität: 16.06.1999 DE 19927370
(43) Veröffentlichungstag der Anmeldung: 20.12.2000
(73) Patentinhaber: HBS Bolzenschweisssysteme GmbH & Co. KG, 85221 Dachau (DE)
(72) Erfinder: Franz, Udo, Prof. Dr., deceased (DE)
(74) Vertreter: Strehl Schübel-Hopf & Partner

(56) Entgegenhaltungen:
- EP-A- 0 550 977
- DE-A- 2 532 311
- DE-A- 19 531 792
- DE-A- 19 642 331
- US-A- 4 743 732
- US-A- 5 820 323

## Beschreibung

Die Erfindung betrifft ein Schweißelement, als Buchse, Schweißmutter, Gewindehülse oder dergleichen ausgebildet, zum Anschweißen an Bauteilen und Werkstücken.

Derartige Schweißelemente sind häufig koaxial an Durchgangsbohrungen eines Werkstückes oder Bauteiles anzuschweißen, was mittels einer Hubzündungs-Bolzenschweißung unter Anwendung eines magnetisch bewegten elektrischen Lichtbogens erfolgt.

Aus der DE 44 17 397 A1 ist ein derartiges als Hohlbolzen ausgebildetes Schweißelement bekannt, dessen Stirnflächenbereich kegelstumpfförmig ausgebildet ist. Aufgrund des nur sehr kleinen Winkels, der hier zur Ausbildung des Kegelstumpfes führt, ist eine exakte Zentrierung des Bolzens zur Werkstückbohrung nicht möglich. Dies kann auch zu fehlerhaften Schweißungen führen, bei denen sich die Symmetrieachse des Bolzens nicht im rechten Winkel zur Werkstückoberfläche befindet. Darüber hinaus ist ein gleichmäßiges Anschmelzen des äußeren konischen Anschweißbereiches nicht sichergestellt, da dieser Anschweißbereich nicht parallel zur Werkstückoberfläche liegt. Für den Schweißprozess bedeutet dies auch, dass partielle Anschmelzungen zur Tropfenbildung und damit zu qualitativ unzureichenden Schweißnähten, bedingt durch Spritzerbildung, führen.

Mit DE 196 37 935 C1 ist ein hohler Schweißbolzen bekannt geworden, welcher unter Anwendung der Hubzündungs-Bolzenschweißung eine feste Verschweißung des hohlen Schweißbolzens zum Werkstück gewährleisten soll, gleichzeitig soll die Gefahr, dass Metallspritzer die Bolzenbohrung erreichen, vermieden werden. Der vorgeschlagene Hohlbolzen ist so ausgebildet, dass er in seinem Stirnbereich einen zur Bolzenbohrung koaxialen Einstich und einen diesen umgebenden Anschweißbereich aufweist. Der Anschweißbereich seinerseits umfasst einen Ansatz, der von einer von dem Einstich ausgehenden und zu einer Spitze ansteigenden, im wesentlichen kegelförmigen Innenfläche und einer im wesentlichen zylindrischen Außenfläche gebildet ist, sowie einen den Ansatz umgebenden, im wesentlichen ebenen Stirnflächenbereich.Mit der Ausbildung der Stirnfläche dieses Hohlbolzens soll einerseits ein sicheres Zünden des Lichtbogens erreicht und andererseits eine feste Verbindung der zu fügenden Teile gesichert werden.

Der Nachteil der vorgestellten Lösung liegt in der Eingrenzung des Einsatzbereiches, da derart ausgebildete Hohlbolzen nur mit Bauteilen/Werkstücken geringer Wandstärke qualitätsgerecht geschweißt werden können.

Aus DE 195 31 792 A1 oder DE 19642331 A1 ist ein Schweißelement mit den im ersten Teil des Anspruchs 1 angegeben Merkmalen bekannt. Zur Erzielung hoher Stromdichte und leichter Zündung des Lichtbogens ist dort eine Zuspitzung des Schweißbereichs vorgesehen.

Der Erfindung liegt daher die Aufgabe zugrunde, ein Schweißelement, als Buchse, Schweißmutter, Gewindehülse oder dergleichen ausgebildet, derart zu entwickeln, das ein sicheres Fügen mit Werkstücken dicker Wandungen sichert und die Nachteile des Standes der Technik beseitigt.

Die Erfindung wird mit den Merkmalen des Anspruches 1 gelöst.
Vorteilhafte Ausgestaltungsmöglichkeiten, mit denen sich zusätzliche Vorteile erzielen lassen, geben die Unteransprüche an.

So wurde ein Schweißelement geschaffen, dessen stirnseitige Oberfläche zur Aufschmelzung und Anbindung an den Grundwerkstoff eine konvexe Form aufweist, die als Schweißansatz ausgebildet ist.
Die konvexe Form ist dabei herausgebildet durch gleiche oder unterschiedliche Radien, die in ihrem Verlauf ineinander übergehen und die konvexe Form des Schweißelementes im Bereich der Aufschmelz- und Bindezone zum Grundwerkstoff herausbilden.

Es gehört auch zur Erfindung, dass die Stirnflächen der Schweißelemente in ihrer Gesamtheit diese konvexe Form besitzen, aber auch in Teilbereichen der Stirnflächen herausgebildet sein können. Wesentliches Merkmal dabei ist, dass die äußeren Radien der konvex ausgebildeten Stirnflächen verjüngend ausgebildet sind, somit gewährleistet ist, dass der Lichtbogen unmittelbar im Bereich der Bindefläche des Schweißelementes wirkt, somit im Bereich der Kontaktflächen vom Schweißelement zum Grundwerkstoff und diesen Bereich entsprechend aufschmilzt, ein örtlich begrenztes Schmelzbad vorliegt, so dass beim Eintauchen des Schweißelementes in das Schmelzbad durch die stattfindende Kristallisierung der Schmelze eine feste Verbindung gewährleistet ist.
Durch die verjüngende Ausbildung der äußeren Radien der konvex gestalteten Stirnflächen wird sichergestellt, dass der Lichtbogen im Bereich der Kontaktflächen wirksam wird und nicht über diesen Bereich hinaus wandert, da die verjüngende Ausbildung der äußeren Radien dies verhindert, so dass die gesamte eingebrachte Energie für den Schmelz- und Schweißvorgang genutzt werden kann.
Werden die äußeren Radien dem gleichen Radiusmaß der konvexen Form oder sogar mit einem größeren Radiusmaß ausgebildet, besteht die Gefahr, dass der Lichtbogen in diese Bereiche wandert, somit längere Wegstrecken zurücklegt, wodurch eine Widerstandserhöhung eintritt und zusätzlicher Energieaufwand erforderlich ist, um eine qualitätsgerechte Aufschmelzung und Schweißung zu erreichen.

Mit nachfolgendem Ausführungsbeispiel soll die Erfindung näher erläutert werden.

Die dazugehörige Zeichnung zeigt in den einzelnen Darstellungen Schweißelemente, deren Stirnflächen im Bereich der Bindeflächen konvex ausgebildet sind.

Bei den Darstellungen a, b, c, d, e handelt es sich um Schweißelemente 1 in Form von Schweißmuttern, welche mit einem Innengewinde versehen sind.
Die Stirnflächen 2 der Schweißelemente 1 sind dabei mit Schweißansätzen in konvexen Formen 3 ausgebildet, nachfolgend nur noch als konvexe Form 3 bezeichnet, deren Formen und Ausbildung selbst so ausgeführt werden können, daß diese konvexe Form 3 über die gesamte Stirnfläche 2 oder auch nur über Teile der Stirnflächen 2 des jeweiligen Schweißelementes 1 herausgebildet sind, deren Dicken oder Breiten mit "b" gekennzeichnet sind.
Der Krümmungsradius der konvexen Form 3 ist mit der Bezugszahl 4 gekennzeichnet, wobei der Krümmungsradius 4 in verschiedenen Maßbereichen ausgebildet sein kann, wodurch die konvexe Form 3 unterschiedliche Querschnittsformen erhält, aber immer so ausgebildet ist, dass der Krümmungsradius 4 beidseitig zu der konvexen Form 3 verjüngend ausgebildet ist, somit diese konvexe Form 3 im weitesten Sinne eine teilelliptische Form besitzt.
Den Übergang von der konvexen Form 3 mit seinem Krümmungsradius 4 in den sich verjüngenden Radius verdeutlichen insbesondere die in d und e dargestellten Schweißelemente 1.

Bei dem unter f dargestellten Schweißelement 1 handelt es sich im weitesten Sinne gleichfalls um eine Schweißmutter, hier um eine sehr dünne Schweißmutter mit einem zylindrischen Ansatzteil 5, welches in entsprechenden Bohrungen eines Werkstückes eingreifen kann und so die tragende Gewindelänge oder Führung des Einsatzelementes erbringt. Auch dieses Schweißelement 1 besitzt auf seiner Stirnfläche 2 die konvexe Form 3, die gleichfalls durch die Wahl der Krümmungsradien 4 bestimmt wird, wobei ihre Anbindungshöhe kleiner gewählt werden kann.

Ein weiteres Schweißelement ist in der Darstellung g wiedergegeben, bei dem es sich um einen Gewindebolzen 6 mit einem besonders gestalteten Gewindebolzenkopf 7 handelt Die Stirnfläche des Gewindebolzenkopfes 7 ist mit einer Eindrehung versehen, dessen Außenwand stirnseitig in der konvexen Form 3 ausgebildet ist, die hier umfänglich an der Stirnseite 2 umläuft.

Weitere Ausführungsformen von Schweißelementen 1 ergeben sich aus den Darstellungen h und i, die als Gewindehülsen 8, 10 ausgebildet und vorzugsweise durch einen Pressvorgang hergestellt sind. Dies einmal in der Form, dass die Gewindehülse 8 mit einem kegeligen Zwischenstück 9 ausgebildet ist, dessen Stirnfläche 2 die konvexe Form 3 aufweist, zum anderen die Gewindehülse 10 einen nach außen gebürtelten Rand 11 besitzt, deren Stirnfläche 2 mit den Krümmungsradien 4 ausgebildet ist, somit die konvexen Formen 3 bei beiden Schweißelementen 1 herausgebildet werden.

Durch die Ausbildung der Stirnflächen 2 der Schweißelemente 1 in konvexer Form 3 ist die Möglichkeit geschaffen worden, den Energieeintrag zu erhöhen, ohne dass der Lichtbogen bei seiner Zündung aus der Bindezone herauswandert bzw. örtlich verstärkt das Schweißelement 1 anschmilzt, vielmehr sichert die konvexe Form 3 der Stirnfläche 2 einen zentrischen Verlauf des Lichtbogens im Bereich der Aufschmelz- und Bindezone, so dass Werkstücke mit dickerer Wandung durch den höheren Energieeintrag an der Aufschmelz- und Bindezone ausreichend erwärmt und aufgeschmolzen werden und somit die Möglichkeit gegeben ist, Schweißelemente 1 an/auf dickere Werkstücke/Grundwerkstoffe qualitätsgerecht schweißen zu können.

Dies wird dadurch erreicht, dass im Bereich der Aufschmelz- und Bindezone die Stirnflächen 2 der Schweißelemente 1 durch deren Ausbildung einen größeren Flächenquerschnitt besitzen, der wieder davon abhängig ist, dass die Breiten "b" der konvexen Formen 3 der Schweißelemente 1 unterschiedlich ausgebildet sind, von der Durchmessergestaltung der Schweißelemente 1, vom Außendurchmesser dₐ sowie vom Innendurchmesser dᵢ durch die Beziehung b ≤ (dₐ - dᵢ) /2 bestimmt werden sowie abhängig sind und im Bereich > 0 bis ≤ 8 mm liegen.

Somit besteht ein Zusammenhang zwischen dem Durchmesser des Schweißelementes 1 und seiner Breite "b" der konvexen Form 3, Ein größer werdender Durchmesser des Schweißelementes 1 ermöglicht eine größere Breite "b" der jeweiligen konvexen Form 3 des Schweißelementes 1, wobei "b" den oben genannten Bereich von max. 8 mm nicht überschreiten sollte. Größere Breitenausbildungen fuhren zu Instabilitäten im gesamten Schweißprozess.

Ferner garantieren die konvexen Formen 3 der Schweißelemente 1 und deren Breiten "b" den Einsatz der Schweißelemente 1 für Grundwerkstoffe mit größerer Dicke, so bis zu 10 mm und darüber.
Dies ergibt sich unmittelbar aus der konvexen Form 3 und seiner vergrößerten Breite. Ein größerer Aufschmelzquerschnitt steht am Schweißelement 1 zur Verfügung und begünstigt durch den erhöhten Energieeintrag die thermische Aktivierung des Grundwerkstoffes, was wiederum bedingt, dass Schweißelemente 1 auf dickere Grundwerkstoffe qualitätsgerecht geschweißt werden können.
Somit besteht auch ein Zusammenhang zwischen der Form des Schweißelementes 1, seines in konvexer Form 3 gestalteten Schweißansatzes und der Dicke des Grundwerkstoffes, so dass kleinere Konvexitäten der Schweißelemente 1 größere Breiten "b" ermöglichen und damit Schweißelemente 1 auf Grundwerkstoffe geschweißt werden können, die sowohl den Dickenbereich s 1,5 bis 2 mm der herkömmlichen Schweißverfahren und bekannten Schweißelemente abdeckt, aber auch den darüber liegenden Dickenbereich von Grundwerkstoffen bis zu 10 mm und darüber hinaus. Dies bedeutet, dass mit Schweißelementen 1 in der beschriebenen Ausführung und Gestaltung, diese sowohl auf Grundwerkstoffe mit Dicken von s = 1,5 bis 2 mm als auch auf Grundwerkstoffe mit Dicken von s bis 10 mm und darüber hinaus qualitätsgerecht geschweißt werden kann.
Dies wird wiederum dadurch erreicht, dass durch die Ausbildung der Form der Schweißelemente 1 der Lichtbogen sowohl die Oberfläche des Grundwerkstoffes als auch die konvexe Form 3 des Schweißelementes 1 aufschmilzt und eine ausreichende Schmelze für den Bindungsprozess entsteht.

Für diesen Prozess ist mit wesentlich, dass die Höhe der konvexen Form 3 und somit des Schweißansatzes so groß ist, dass der für den Prozess notwendige Lichtbogen unmittelbar im Bereich des Schweißansatzes wirkt und das Höhenmaß ≥ 1 mm beträgt.

Damit unterscheiden sich die vorgestellten Schweißelemente für das MARC-Schweißen, des Schweißens mit bewegtem Lichtbogen von bekannten Schweißelementen zum Widerstandsschweißverfahren merklich und ein qualitätsgerechtes Schweißen derartiger Schweißelemente an Grundwerkstoffen ist nur möglich, wenn die Schweißelemente in der beschriebenen Form ausgebildet sind.

Neben obigen Ausführungen ergibt sich ein weiterer Zusammenhang zwischen der Anordnung der konvexen Form 3 des Schweißansatzes im Bereich der Stirnfläche 2 eines Schweißelementes 1. Dies in der Art und Weise, dass bei konstanter Breite "b" eine zum äußeren Durchmesser des Schweißelementes 1 ausgebildete bzw. gerichtete konvexe Form 3, ein höheres Widerstandsmoment gegenüber weiter nach innen ausgebildeten konvexen Formen 3 besitzen. Somit sind die Lage der konvexen Form 3, die Lage des Schweißansatzes und das Breitenmaß "b" der jeweiligen konvexen Form 3 mitbestimmend für die Festigkeit der Schweißverbindung.

So können die konvexen Formen 3 sowohl mittig, außermittig, aber auch zum Außendurchmesser dₐ oder zum Innendurchmesser dᵢ gerichtet, auf den Stirnflächen der Schweißelemente 1 angeordnet/ausgebildet sein. Dies bedeutet, die konvexen Formen 3 sind auf den Stirnflächen 2 der Schweißelemente 1, auf deren gesamten Stirnflächenbereichen herausbildbar und auf diesen angeordnet.

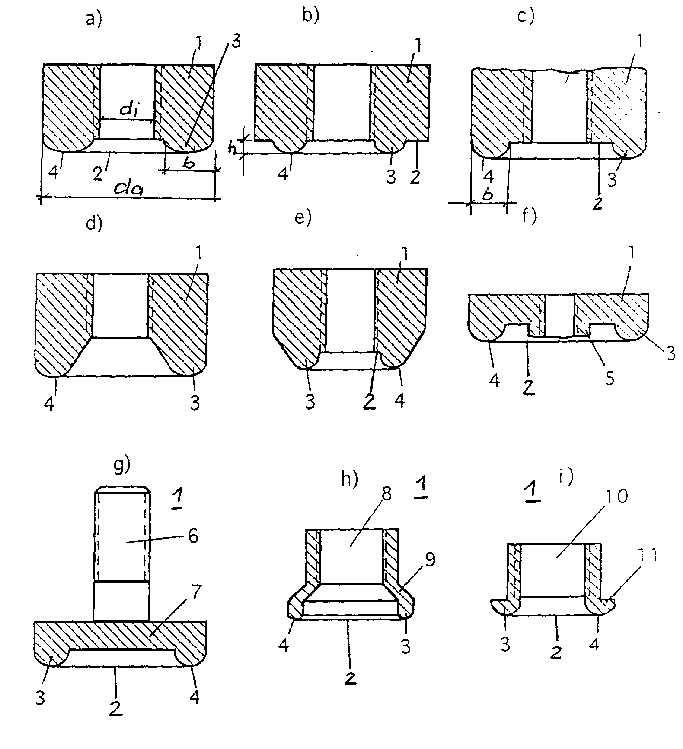

Neben den in der Zeichnung aufgeführten Ausbildungen von Schweißelementen 1 können auch weitere Schweißelemente 1 in Form von Hülsen, Bolzen oder ähnlichen Gestaltungen mit der konvexen Form 3 ausgebildet sind. Auf keinen Fall ist die Ausgestaltung von Schweißelementen 1 in der beschriebenen konvexen Form nur auf die dargestellten und beschriebenen Ausführungsformen beschränkt.

## Patentansprüche

1. Schweißelement (1), ausgebildet als Buchse, Schweißmutter, Gewindehülse, Gewindebolzen oder Bolzen, dessen Stirnfläche im Schweißbereich einen konvexen Schweißansatz (3) aufweist,
**dadurch gekennzeichnet, dass** zum Anschweißen mittels Hubzündung und magnetisch bewegten Lichtbogens (MARC-Schweißen) der Krümmungsradius des Schweißansatzes (3) von der Mitte der konvexen Form ausgehend nach innen und außen abnimmt.

2. Schweißelement (1) nach Anspruch 1 in Form einer Buchse, Schweißmutter oder Gewindehülse, deren Wandstärke größer ist als die größte Breite (b) des Schweißansatzes (3).

3. Schweißelement (1) nach Anspruch 2, wobei die Mitte der konvexen Form des Schweißansatzes (3) gegenüber der Mitte der Wandstärke versetzt ist.

4. Schweißelement (1) nach einem der vorhergehenden Ansprüche, wobei die axiale Höhe des Schweißansatzes (3) mindestens 1 mm beträgt.

5. Schweißelement (1) nach einem der vorhergehenden Ansprüche, wobei die größte Breite (b) des Schweißansatzes (3) höchsten 8 mm beträgt.

## Claims

1. A welding element (1), formed as a sleeve, welding nut, threaded sleeve, threaded stud or stud, the end face of which has a convex welding projection (3) within the welding area,
**characterised in that** the radius of curvature of the welding projection (3) decreases inward and outward, starting from the centre of the convex shape, for drawn-arc welding using a magnetically moved arc (MARC welding).

2. The welding element (1) of claim 1 in the form of a sleeve, welding nut or threaded sleeve having a wall thickness greater than the greatest width (b) of the welding projection (3).

3. The welding element (1) of claim 2, wherein the centre of the convex shape of the welding projection (3) is offset from the centre of the wall thickness.

4. The welding element (1) of any preceding claim, wherein the axial height of the welding projection (3) is at least 1 mm.

5. The welding element (1) of any preceding claim, wherein the greatest width (b) of the welding projection (3) is 8 mm at most.

## Revendications

1. Elément à souder (1), formé en tant que douille, écrou à souder, bague filetée, boulon fileté ou boulon, dont la surface frontale dans le secteur de soudage présente un embout à souder convexe (3),
**caractérisé en ce que** le rayon de courbure de l'embout à souder (3) décroît vers l'intérieur et vers l'extérieur en partant du centre de la forme convexe, afin de réaliser une soudure avec amorçage par arc tiré et arc électrique déplacé magnétiquement (soudure par procédé MARC).

2. Elément à souder (1) selon la revendication 1 sous la forme d'une douille, d'un écrou à souder ou d'une bague filetée, dont l'épaisseur de paroi est supérieure à la plus grande largeur (b) de l'embout à souder (3).

3. Elément à souder (1) selon la revendication 2, dans lequel le centre de la forme convexe de l'embout à souder (3) est décalé par rapport au centre de l'épaisseur de paroi.

4. Elément à souder (1) selon l'une quelconque des revendications précédentes, dans lequel la hauteur axiale de l'embout à souder (3) est d'au moins 1 mm.

5. Elément à souder (1) selon l'une quelconque des revendications précédentes, dans lequel la plus grande largeur (b) de l'embout à souder (3) est d'au plus 8 mm.
